# EUROPEAN PATENT SPECIFICATION

(11) **EP 1 038 396 B1**
(45) Date of publication and mention of the grant of the patent: **29.01.2003**
(21) Application number: 98955806.9
(22) Date of filing: 27.11.1998
(51) Int. Cl.: H04N 7/15

(54) **CONFERENCE FACILITY**
KONFERENZEINRICHTUNG
COMPLEMENT DE SERVICE DE CONFERENCE

(30) Priority: 09.12.1997 EP 97309926
(43) Date of publication of application: 27.09.2000
(73) Proprietor: BRITISH TELECOMMUNICATIONS public limited company, London EC1A 7AJ (GB)
(72) Inventor: McGRATH, Andrew, John, Ipswich, Suffolk IP4 3BJ (GB)
(74) Representative: Lidbetter, Timothy Guy Edwin
(86) International application number: GB9803555
(87) International publication number: WO99030494

(56) References cited:
- EP-A- 0 516 371
- US-A- 5 491 743
- TAKASHI KOUNO ET AL: "DRAWING ENVIRONMENT FOR VIRTUAL SPACE" IEICE TRANSACTIONS ON COMMUNICATIONS, vol. E78-B, no. 10, 1 October 1995, pages 1358-1364, XP000540872 TOKYO, JP

## Description

This invention relates to teleconferencing, and in particular a facility for the generation of images relating to a "virtual meeting space", within the context of which individuals at a plurality of locations remote from each other may interact in a manner which emulates a conventional meeting.

A number of systems are being developed which define a virtual Cartesian space in which the individual members of a teleconference are positioned, and each individual's view of the meeting space as shown on their display is determined by the individual user's position within the Cartesian space. Examples are to be found in United States Patent 5,491,743 granted to Shiio et al (assigned to IBM), and European Patent Application no 0 516 371, in the name of Fujitsu. Facilities may be provided in such systems to allow documents to be created, retrieved, etc. For example, one wall of the "meeting space" may be represented as a drawing board on which images can be represented. The user wishing to use the drawing board carries out a control function which causes the system to change the relative positions of the user and the whiteboard in the virtual space such that the user can generate images on it.

Individual users are represented in the virtual space display by computer-generated representations of the users, known as "avatars" (or "icons"). These may be derived from video images of the users, either live or retrieved from a store, but usually they are digitally generated representations. In general, each user is able to select the appearance of his or her avatar in the virtual space from a menu of characteristics. Alternatively, each individual user may be able to select, for his own viewpoint, how each of the other users' avatars will appear. Other characteristics of the meeting space, such as the colour and shape of the elements of the meeting space, may also be selectable by the user.

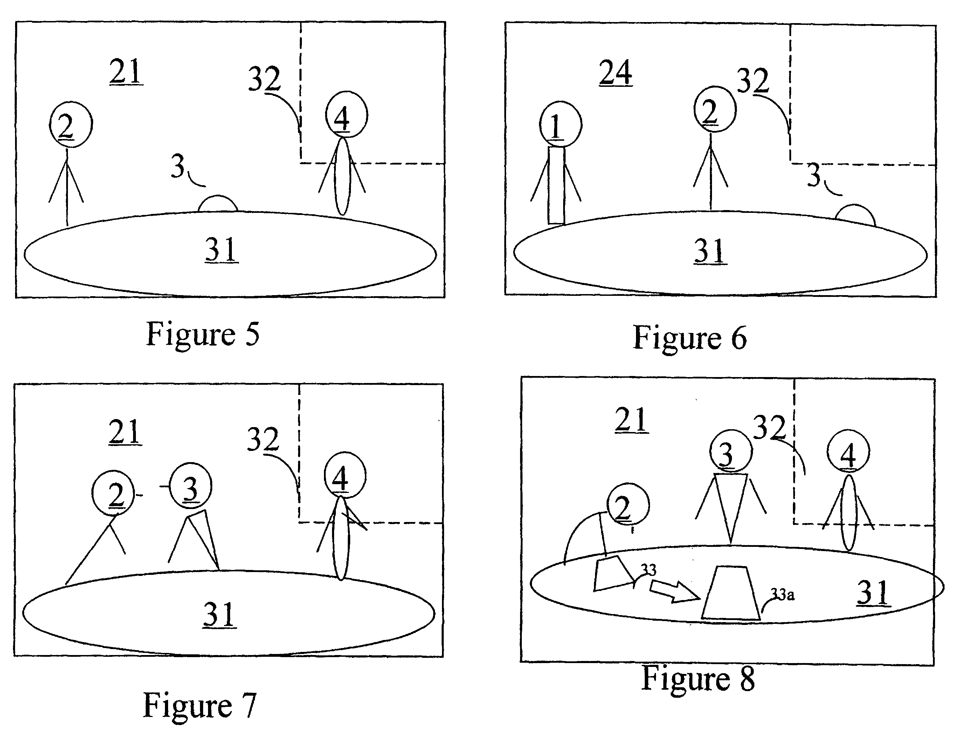

There are a number of disadvantages to the conventional virtual meeting spaces. In the system discussed in the Shiio patent already mentioned, an overview of a conference room is represented. Each user sees the same view, including his or her own avatar in whatever position it has been placed. In this arrangement the user does not have the feeling of being in a room with the other participants, but is merely watching his or her avatar's activities, from a vantage point outside the room. It is possible to arrange for each user to see only the avatars of the other users, and not his own, from a viewpoint such that the relative positions of each avatar to each other avatar and to the user's viewpoint is consistent between users. For example, with reference to Figure 2 of the drawings attached to this specification, if a user "3" is shown a representation of the meeting space in which the avatar of user "1" is facing him, with avatars of users "2" and "4" facing each other at 90° to the viewpoint of user "3", then the user "4" would see the avatar of user "2" facing him, and the avatars of users "1" and "3" facing each other at 90° to his viewpoint. This gives a more realistic representation of a real conference room, but the relative positions of the users make it difficult to view all the users and other elements of the conference facility at the same time on a conventional video monitor.

In the Fujitsu reference mentioned previously, the avatars of the other users are arranged around the user's virtual viewpoint, as if on a turntable, which can be rotated to bring a selected avatar into view. The user represented by that avatar will not necessarily be looking at the first user's avatar. Thus eye contact is not necessarily two-way, and participants will not interact as they would in a real space as two avatars which appear adjacent to one user will not necessarily appear so to another user.

Furthermore, events taking place in the meeting space, such as an individual operating the "whiteboard", or joining or leaving the meeting, require complex navigation around the virtual space in order to be reasonably realistic. In both systems, such navigation requires considerable thought on the part of the user, to ensure that unrealistic occurrences, such as one user walking through another, or through the furniture, do not take place. Such distractions can disrupt the conduct of the conference itself. Furthermore, if a drawing facility is provided, it can only occupy a portion of the view, making it difficult to use.

According to the invention, there is provided a method of representing users on a display device in a telecommunications conferencing facility by means of graphical representations corresponding to the respective users, wherein the users are depicted as carrying out symbolic actions, relating to the various events taking place during the virtual telecommunications conferencing process, each user being presented with a viewpoint representative of the position of that user in a virtual space and in which the other users and their activities are represented by means of graphical representations, and characterised in that in the viewpoint presented to each user the representations of each of the other users are in positions, and have movements, relative to each other and the viewpoint, selected according to the viewpoint of the user.

According to a second aspect, there is provided a telecommunications conferencing system comprising display control means for representing users on display devices by means of graphical representations corresponding to the respective users, the display control means being arranged to depict symbolic actions carried out by users, relating to the various events taking place during the virtual telecommunications conferencing process, each user being presented with a viewpoint representative of the position of that user in a virtual space and for presenting, to each user a representation of the other users and their activities;
characterised in that the display control means is arranged to represent the presence and activities of each user to each other user by means of symbolic positions and movements, presented to each user such that in the viewpoint presented to each user the representations of each of the other users are in relative positions, and have relative movements, selected according to the viewpoint of the user.

This invention allows the realistic representation of a meeting by providing a "meeting space" which is consistent from the viewpoint of each user, without necessarily being consistent between users.

The more inconvenient aspects of a real meeting space can be eliminated, rather than emulated. For example, the accessing of a facility by one user for viewing by other users can be represented in a different manner for the viewing users and the accessing user, and users not currently actively engaged in the telecommunications conference can be represented in a different manner from those currently viewing the conference.

Activities such as providing copies of documents may be represented symbolically, and social cues may also be represented, in response to specific commands from the individual users.

Each user's representation of the meeting space may be arranged such that all other elements of the meeting space, including the other users, appear within a narrow and preferably fixed field of view, corresponding to his own display device's dimensions. For example, a user with a wide-screen panoramic display device may depict the other users spaced further apart than would a user with a much smaller screen, for example on a lap-top computer.

This improves the ease of use of the system by each user in the meeting space, as changes of viewpoint are not necessary. It allows all users to see each other without changing viewpoint, which is not possible even in a real meeting space.

The operation of the invention can take place by interaction between a central "server", and a plurality of client devices. The central server controls those aspects of the system common to all users, such as information relating to the activities to be depicted, and the client devices are responsible for those aspects specific to each user, such as actions taken by the respective user, information on which is transmitted to the server for depiction on the other user terminals.

The invention will now be discussed in greater detail with reference to the drawings.
Figure 1 represents the general configuration of a system arranged to operate the present invention,
Figure 2 is a representation of a virtual meeting space according to the prior art,
Figure 3 and 4 are a representations of a virtual meeting space according to the invention,
Figures 5 to 12 are various representations of the virtual meeting space as seen by different individual users in different circumstances as will be described.

In Figure 1 there is shown an arrangement to allow four users 1, 2, 3, 4 to interact in a virtual teleconference. Each user has a respective human/machine interface unit 21, 22, 23, 24, which includes all the necessary video and audio equipment for the user to see and hear what is happening in the virtual meeting space, and the necessary user input devices (e.g. keyboards, computer "mouse" etc.) to provide input to the virtual meeting space. Each interface, 21, 22, 23, 24 is connected to a respective client apparatus 11, 12, 13, 14 which provides an interface between the user and a main server 10 which controls the operation of the meeting space. The server 10 has, as a further input, a store 30 which maintains permanent data defining the virtual meeting space. The control of the meeting space is carried out by interaction between the client apparatuses 11, 12, 13, 14 and the server 10. In some embodiments most of the display control functions may take place in the server 10, but in systems where the display apparatuses 21, 22, 23, 24 are dissimilar, more of the display control functions may be different for each apparatus, therefore requiring more of the display control functions to be distributed in the client apparatus 11, 12, 13, 14.

In response to inputs from one of the users (e.g. user 1) through his respective user interface (21) the client apparatus transmits these inputs to the main server 10 which, in accordance with the meeting space definition 30, controls the images to be represented on the other users screen 22, 23, 24 to represent the activities of the user 1, input through interface device 21. As a very simple example, the actions of the user 1 when first establishing contact with the meeting space are translated by the client computer 11 and converted by the server 10, into a representation of the user 1 entering the meeting space, which is in turn passed to the individual clients 12, 13, 14 to be represented as the avatar of the user 1 moving into the field of view of the display devices 22, 23, 24.

The manner of representation of the individual user 1 in the virtual space may be selected either by the user 1 through his respective client device 11, or by each receiving user 2, 3, 4 in the meeting space, who may each select an avatar according to his own requirements to represent the user 1. Similarly, some parts of the virtual meeting space may be defined centrally in the meeting space definition unit 30, whereas other aspects may be defined by each individual client 11, 12, 13, 14 independently of the others. Such definitions may include colour schemes, the relative locations of the individual users 1, 2, 3, 4, etc.

In Figure 2 is shown a representation of a prior art virtual meeting space. It will be noted that the virtual meeting space shows four users 1, 2, 3, 4, located at equally spaced intervals around a table 31. It will be noted that in order for any user (e.g. user 3) to clearly see all the other users (1, 2, 3, 4), a fairly wide angle of view is required. In order to view different users the direction of view must be changed, and it is difficult to view all members of the virtual conference simultaneously. This problem obviously increases, the more people are taking part in the conference. Furthermore, if there are items such as a representation of a "whiteboard" in the meeting space, it cannot be visible to all participants at once, as if it is facing user "1", for example, the avatar of user "3" will be facing away from it. It will therefore not appear in his field of view.

Figure 3 shows a virtual meeting space in the system according to the invention as seen by a user 3. It will be noted that for the user 3 the three remaining users 1, 2, 4 now subtend a much narrower angle.

Figure 4 shows the same virtual meeting space, but seen from the viewpoint of a different user 4. It will be seen that the other users 1, 2, 3 also subtend a narrow angle as seen from the user 4, in the same way that in Figure 3 the users 1, 2, 4 subtend a narrow angle as seen from the user 3. The server 10 and clients 11, 12, 13, 14 are arranged to represent the relative positions of the avatars according to this distorted co-ordinate system, such that for each user the other users subtend a relatively narrow angle and may all appear within the same field of view. It will be noted that although the angular distance between the users is different from each viewpoint, the order in which they appear around the table is preserved. This allows sociological cues, such as interactions between neighbours around a table, to occur consistently regardless of the viewpoint.

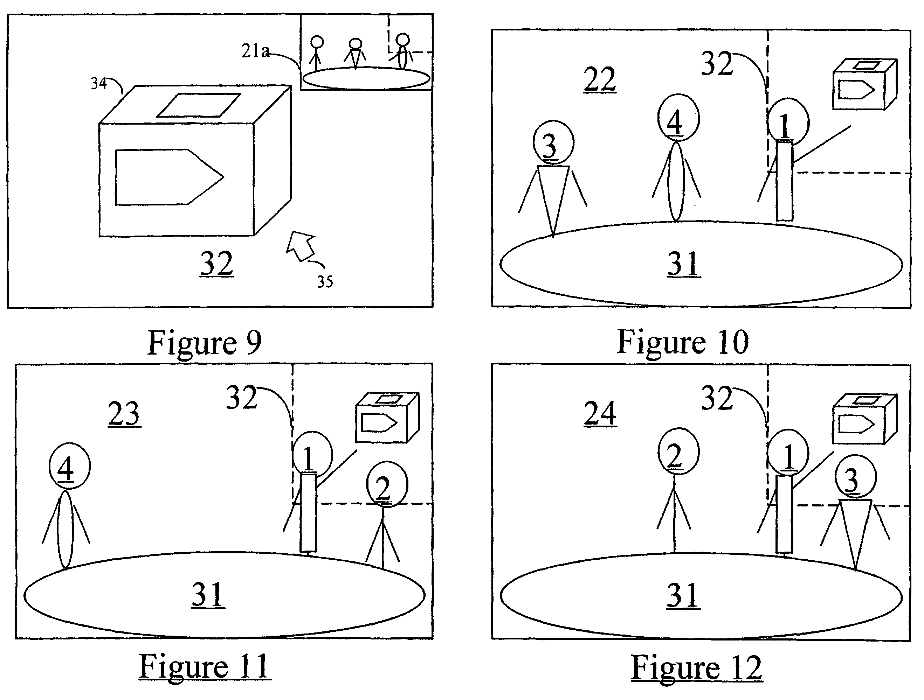

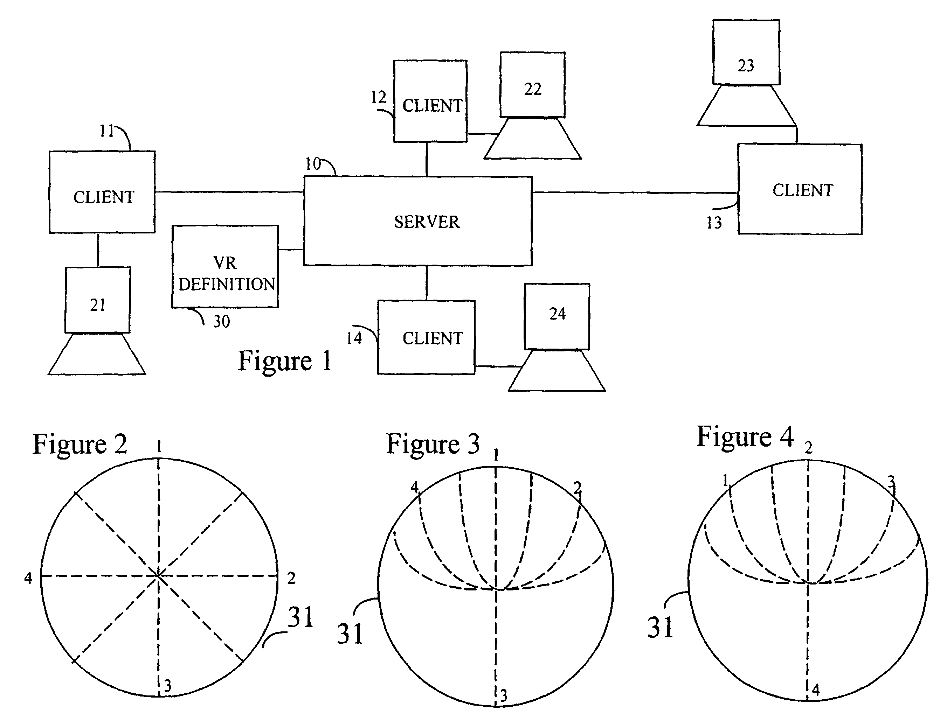

Figures 5 to 12 show various representations of the virtual meeting space, as viewed by different individual users 1, 2, 3, 4, in different circumstances. The avatars representing each user are indicated by reference numerals 1, 2, 3 and 4. For clarity in this description, the avatars for each user has a respective shape, which is consistent between viewpoints, but as has been discussed, each user may choose to represent a particular participant in a different way in his own viewpoint. The viewpoint represented in each figure is indicated by the reference numeral relating to the user terminal on which the view is being represented. Therefore, Figures 5, 7, 8 and 9 show the view as seen on user terminal 21, belonging to user 1; Figure 6 and 12 show the view on terminal 24, belonging to user 4, and Figures 10 and 11 represent terminals 22 and 23 respectively, in use by users 2 and 3 respectively. Common to all the virtual meeting space images are the avatars of the other users 1, 2, 3, 4, a table 31 and a "whiteboard" 32. Other elements will be described with reference to the figures in which they are represented. It should be noted that for each user, all other users and elements of the meeting space are in full view, without any need to change viewpoint. This is so, despite some elements appearing, to one user, to be behind another user.

Figure 5 shows schematically the view of the virtual meeting space as seen by one of the participants 1. Users 2 and 4 are also taking part in the teleconference; this can be seen by the full representation of the avatars 2 and 4 in their respective positions around the table 31. User 3, although allocated a position in the virtual meeting space has not yet entered the meeting space, and his avatar is replaced by a representation of an empty seat 3. Users 2, 3, and 4 are represented as subtending an angle of approximately 90°, with the avatars of users 2 and 4 each at approximately 135° from the angular position around the table 31 of the viewing user 1.

Figure 6 shows the same situation as viewed by another user 4. It will be seen that the view is the same as that in Figure 5, except that user 1 is represented instead of the user 4. Note that the relative positions around the table are preserved i.e. user 3 is still to the left of user 2, but the angular distance between users is not the same as in Figure 5. In the meeting space as viewed by the user 4, users 1 and 2 are separated by only approximately 45°, with the users 1 and 3 at approximately 135° angular position from the viewing user 4.

Figure 7 represents the view of the meeting space as viewed by the user 1, in the situation where two of the users 2, 3 are conducting a conversation between themselves, using a separate connection. The avatars of the users 2 and 3 are shown as facing each other and closer together than in other views, indicating that they are not currently primarily concentrating on the meeting space. The facility for private discussion (conferring) may be provided in virtual meeting spaces in order to allow discussion between two parties, for example to agree a negotiating position before presenting it to the meeting at large.

A user may indicate that he wishes to close the conference in the near future, or to withdraw from it, by entering a command to the server. The server responds by causing the avatar of that user to perform an action representative of activities performed by real people in such a situation.
Such actions may include putting papers into a case, looking at a clock (if one is present in the virtual meeting space) or at a wristwatch, as shown in Figure 7 (user 4), or putting a coat on. Different actions may be represented each time the user activates the command, to indicate increasing proximity to the closure time. The user may pre-programme such cues to appear at predetermined times leading up to the desired closure time.

Figure 8 is a representation in which the user 2, although still connected to the meeting space, is consulting a document. This can be done by the user 2 by calling up the relevant document on his computer screen (for example by 'clicking' with a 'mouse'), the meeting space typically being relegated to a small representation of the meeting space in one corner of the viewpoint of the screen. The system shows the avatar of the user looking at a representation 33 of a document on the table 31, to represent to the other users, e.g. user 1, the fact that the user is primarily studying something other than the meeting space.

Another user 1 may obtain a copy of a document by performing an action on it (e.g. 'clicking' a mouse cursor). Subject to the document not being copy-protected, (which may be indicated by some characteristic of the representation of the document, e.g. its colour), the user 1 can then obtain a copy of the document. Alternatively the user 2 who holds the document may perform some action to copy the document to one, some, or all of the other participants. A representation 33a of the copy will be shown in the user space as moving from the user 2 to the other user or users.

Figures 9, 10, 11 and 12 represent the viewpoints of the individual users 1, 2, 3 and 4 when a user (user 1 for example) wishes to use the "whiteboard" facility of the virtual meeting space. In order to access this facility the user 1 may carry out predetermined input in the user interface unit 21 in order to indicate that he wishes to use the whiteboard. For example, he may use a "mouse" to "click" on the whiteboard space 32 represented in viewpoint 21. This will cause the screen representation 21 to change to a full screen view of the whiteboard 32 as shown in Figure 9. A cursor 35 is present to allow the user to draw a diagram 34 etc. on the whiteboard 32. The view of the meeting space is relegated to an inset 21a.

From the points of view of the other users 2, 3 and 4, the avatar of the user 1 is represented as moving from his respective position around the table 31 (which is of course different for each user) towards the representation 32 of the whiteboard (whose position relative to the avatar of user 1 is also different in each viewpoint). The movement of the avatar 1 to the whiteboard 32 is therefore different in each case, because of the different viewpoints. Furthermore, the user 1 is not required to 'navigate' around (or through) the virtual table 31 to reach the whiteboard 32.

It will be noted that in each viewpoint the whiteboard 32 appears in the field of view. However, each user sees the whiteboard 32 positioned behind a different other user. For example, in Figure 5 it will be seen that from the viewpoint of user 1 the whiteboard 32 is behind the avatar of user 4. In Figure 6, the whiteboard 32 seen by the user 4 is behind the avatar of user 3. Thus, unlike in a conventional virtual meeting space (or indeed a real meeting space), no user perceives the whiteboard as being behind himself: each user perceives the whiteboard as behind someone else. Thus each user will find the whiteboard is within his field of view.

Movements, positions, and other attributes of the individual users are thus represented symbolically in the virtual meeting spaces. Each user will see the other users' avatars behaving in an appropriate way for activities taking place during the meeting, although the users will have a different view as to the detail of such activities, e.g. the distance that another user has to move in order to access an element, the relative distances between avatars, and even the appearances of the individual avatars and the fixed parts of the meeting space.

## Claims

1. A method of representing users (1, 2, 3, 4) on a display device (21, 22, 23, 24) in a telecommunications conferencing facility by means of graphical representations corresponding to the respective users, wherein the events taking place during the virtual telecommunications conferencing process cause the representations of the users (1, 2, 3, 4) to be depicted as carrying out actions symbolic of those events, the display device (21) presenting, to each user (1), a virtual space depicting graphical representations of the other users (2, 3, 4) and their activities, the virtual space being depicted as seen from a viewpoint representative of the position of that user (1) in the virtual space, and **characterised in that**, in the virtual space presented to a first user (1), the relative positions and movements of the users (1, 2, 3, 4) are different from the relative positions and movements of the users (1, 2, 3, 4) in the virtual space presented to a second user (2).

2. A method according to claim 1, wherein for each user (1), the representations of each of the other users (2, 3, 4) are arranged such that they are all contained within the field of view of the user's display device (21).

3. A method according to claim 2, in which the symbolic actions are selected such that they take place within a fixed field of view.

4. A method according to claim 1, 2 or 3, wherein the accessing of a facility by one user (1) for viewing by other users (2, 3, 4) is represented in a different manner for the viewing users (2, 3, 4) and the accessing user (1).

5. A method according to one of claims 1 to 4, wherein users (3) not currently actively engaged in the telecommunications conference are represented in a different manner from those currently viewing the conference (2, 4).

6. Telecommunications conferencing system comprising display control means (10, 11, 12, 13, 14) for representing users on display devices (21, 22, 23, 24) by means of graphical representations corresponding to the respective users (1, 2, 3, 4), the display control means being arranged to depict symbolic actions carried out by users, relating to the various events taking place during the virtual telecommunications conferencing process, such that each user (1) is presented with a view of a virtual space depicting graphical representations of the other users (2, 3, 4) and their activities, the virtual space being depicted as seen from a viewpoint representative of the position of that user (1) in the virtual space; the display control means (10, 11, 12, 13, 14) being arranged to represent the presence and activities of each user (2, 3, 4) to each other user (1) by means of symbolic positions and movements of graphical representations of the users in a virtual space, the virtual space being depicted as seen from a viewpoint representative of the position of that user (1) in the virtual space, and **characterised in that** the display control means is arranged such that in the virtual space presented to a first user (1), the relative positions and movements of the users (1, 2, 3, 4) are different from the relative positions and movements of the users (1, 2, 3, 4) in the virtual space presented to a second user (2).

7. Conferencing system according to claim 6, wherein the display control means is arranged to represent, for each user (1), each of the other users (2, 3, 4) such that they are all subtended within the field of view of the display device (21) of that user (1).

8. Conferencing system according to claim 7, in which the symbolic actions are selected such that they take place within a fixed field of view.

9. Conferencing system according to any of claims 6 to 8 comprising means for accessing a facility by one user (1) for viewing by other users (2, 3, 4) wherein the accessed facility is represented in a different manner for the viewing users and the accessing user.

10. Conferencing system according to any of claims 6 to 9, wherein the display control means (10, 11, 13, 14) is arranged to represent users (3) not currently actively engaged in the telecommunications conference in a different manner from those (2, 4) currently viewing the conference.

11. System according to any of claims 6 to 10, comprising client means (11, 12, 13, 14) associated with each user (1, 2, 3, 4) for generating at least part of the user's viewpoint.

12. System according to any of claims 6 to 11, comprising server means (10) accessible by each user (1, 2, 3, 4) for generating at least part of the users' viewpoints.

## Patentansprüche

1. Verfahren zum Darstellen von Anwendern (1, 2, 3, 4) auf einer Anzeigevorrichtung (21, 22, 23, 24) in einer Telekommunikationskonferenz-Anlage mittels graphischer Darstellungen, die den jeweiligen Anwendern entsprechen, wobei die während des virtuellen Telekommunikationskonferenz-Prozesses stattfindenden Ereignisse bewirken, daß die Darstellungen der Anwender (1, 2, 3, 4) so veranschaulicht werden, als ob diese Aktionen ausführten, die diese Ereignisse symbolisieren, wobei die Anzeigevorrichtung (21) jedem Anwender (1) einen virtuellen Raum präsentiert, der graphische Darstellungen der anderen Anwender (2, 3, 4) und ihrer Aktivitäten veranschaulicht und so veranschaulicht wird, als ob er von einem Standpunkt aus, der die Position dieses Anwenders (1) in dem virtuellen Raum repräsentiert, betrachtet würde, **dadurch gekennzeichnet, daß** in dem einem ersten Anwender (1) präsentierten virtuellen Raum die relativen Positionen und Bewegungen der Anwender (1, 2, 3, 4) von den relativen Positionen und Bewegungen der Anwender (1, 2, 3, 4) in dem einem zweiten Anwender (2) präsentierten virtuellen Raum verschieden sind.

2. Verfahren nach Anspruch 1, bei dem für jeden Anwender (1) die Darstellungen jedes der anderen Anwender (2, 3, 4) so beschaffen sind, daß sie alle in dem Gesichtsfeld der Anzeigevorrichtung (21) des Anwenders enthalten sind.

3. Verfahren nach Anspruch 2, bei dem die symbolischen Aktionen so ausgewählt werden, daß sie in einem festen Gesichtsfeld stattfinden können.

4. Verfahren nach Anspruch 1, 2 oder 3, bei dem der Zugriff auf eine Anlage durch einen Anwender (1) für die Betrachtung durch die anderen Anwender (2, 3, 4) für die betrachtenden Anwender (2, 3, 4) und den zugreifen den Anwender (1) in unterschiedlicher Weise dargestellt wird.

5. Verfahren nach einem der Ansprüche 1 bis 4, bei dem Anwender (3), die momentan nicht aktiv an der Telekommunikationskonferenz teilnehmen, in einer anderen Weise als jene Anwender, die die Konferenz (2, 4) beobachten, dargestellt werden.

6. Telekommunikationskonferenz-System, das Anzeigesteuermittel (10, 11, 12, 13, 14) zum Darstellen von Anwendern auf Anzeigevorrichtungen (21, 22, 23, 24) mittels graphischer Darstellungen, die den jeweiligen Anwendern (1, 2, 3, 4) entsprechen, umfaßt, wobei die Anzeigesteuermittel so beschaffen sind, daß sie symbolische Aktionen, die von den Anwendern ausgeführt werden, in bezug auf die verschiedenen Ereignisse, die während des virtuellen Telekommunikationskonferenz-Prozesses stattfinden, veranschaulichen, derart, daß jedem Anwender (1) eine Ansicht eines virtuellen Raums präsentiert wird, der graphische Darstellungen der anderen Anwender (2, 3, 4) und ihrer Aktivitäten veranschaulicht, wobei der virtuelle Raum so veranschaulicht wird, als ob er von einem Standpunkt aus, der die Position dieses Anwenders (1) in dem virtuellen Raum darstellt, betrachtet würde; wobei die Anzeigesteuermittel (10, 11, 12, 13, 14) so beschaffen sind, daß sie das Vorhandensein und die Aktivitäten jedes Anwenders (2, 3, 4) für jeden anderen Anwender (1) mittels symbolischer Positionen und Bewegungen graphischer Darstellungen der Anwender in einem virtuellen Raum darstellen, wobei der virtuelle Raum so veranschaulicht wird, als ob er von einem die Position dieses Anwenders (1) in dem virtuellen Raum darstellenden Standpunkt aus betrachtet würde, **dadurch gekennzeichnet, daß** die Anzeigesteuermittel so beschaffen sind, daß in dem einem ersten Anwender (1) präsentierten virtuellen Raum die relativen Positionen und Bewegungen der Anwender (1, 2, 3, 4) von den relativen Positionen und Bewegungen der Anwender (1, 2, 3, 4) in dem einem zweiten Anwender (2) präsentierten virtuellen Raum verschieden sind.

7. Konferenzsystem nach Anspruch 6, bei dem die Anzeigesteuermittel so beschaffen sind, daß sie für jeden Anwender (1) jeden der anderen Anwender (2, 3, 4) so darstellen, daß diese alle in dem Gesichtsfeld der Anzeigevorrichtung (21) dieses Anwenders (1) gegenüberliegen.

8. Konferenzsystem nach Anspruch 7, bei dem die symbolischen Aktionen in der Weise ausgewählt sind, daß sie in einem festen Gesichtsfeld stattfinden.

9. Konferenzsystem nach einem der Ansprüche 6 bis 8, das Mittel umfaßt, mit denen ein Anwender (1) auf eine Anlage zugreifen kann, um von anderen Anwendern (2, 3, 4) beobachtet zu werden, wobei die Anlage, auf die zugegriffen wird, für die beobachtenden Anwender und den zugreifenden Anwender in unterschiedlicher Weise dargestellt wird.

10. Konferenzsystem nach einem der Ansprüche 6 bis 9, bei dem die Anzeigesteuermittel (10, 11, 13, 14) so beschaffen sind, daß sie Anwender (3), die momentan nicht aktiv an der Telekommunikationskonferenz teilnehmen, in anderer Weise als jene Anwender (2, 4), die die Konferenz momentan beobachten, darstellen.

11. System nach einem der Ansprüche 6 bis 10, das Client-Mittel (11, 12, 13, 14) umfaßt, die jedem Anwender (1, 2, 3, 4) zugeordnet sind, um wenigstens einen Teil des Standpunkts des Anwenders zu erzeugen.

12. System nach einem der Ansprüche 6 bis 11, das Server-Mittel (10) umfaßt, auf die jeder Anwender (1, 2, 3, 4) zugreifen kann, um wenigstens einen Teil der Standpunkte der Anwender zu erzeugen.

## Revendications

1. Procédé de représentation d'utilisateurs (1, 2, 3, 4) sur un dispositif d'affichage (21, 22, 23, 24) dans un équipement de conférence par télécommunications au moyen de représentations graphiques correspondant aux utilisateurs respectifs, dans lequel les événements ayant lieu durant le processus de conférence virtuelle par télécommunications amène les représentations des utilisateurs (1, 2, 3, 4) à être figurées comme exécutant des actions symboliques de ces événements, le dispositif d'affichage (21) présentant, à chaque utilisateur (1), un espace virtuel décrivant des représentations graphiques des autres utilisateurs (2, 3, 4) et leurs activités, l'espace virtuel étant figuré comme étant vu d'un point de vue représentatif de la position de cet utilisateur (1) dans l'espace virtuel, et **caractérisé en ce que**, dans l'espace virtuel présenté à un premier utilisateur (1), les positions et les déplacements relatifs des utilisateurs (1, 2, 3, 4) sont différents des positions et des déplacements relatifs des utilisateurs (1, 2, 3, 4) dans l'espace virtuel présenté à un second utilisateur (2).

2. Procédé selon la revendication 1, dans lequel, pour chaque utilisateur (1), les représentations de chacun des autres utilisateurs (2, 3, 4) sont disposées de manière à ce qu'elles soient toutes contenues dans le champ de vision du dispositif d'affichage de l'utilisateur (21).

3. Procédé selon la revendication 2, dans lequel les actions symboliques sont choisies de manière à ce qu'elles aient lieu à l'intérieur d'un champ de vision fixe.

4. Procédé selon la revendication 1, 2 ou 3, dans lequel l'accès à un équipement par un utilisateur (1) en vue d'une visualisation par les autres utilisateurs (2, 3, 4) est représenté de manière différente pour les utilisateurs observateurs (2, 3, 4) et l'utilisateur effectuant l'accès (1).

5. Procédé selon l'une des revendications 1 à 4, dans lequel les utilisateurs (3) qui ne sont pas impliqués actuellement activement dans la conférence par télécommunications sont représentés d'une manière différente de ceux qui visualisent actuellement la conférence (2, 4).

6. Système de conférence par télécommunications comprenant un moyen de commande d'affichage (10, 11, 12, 13, 14) destiné à représenter des utilisateurs sur des dispositifs d'affichage (21, 22, 23, 24) au moyen de représentations graphiques correspondant aux utilisateurs respectifs (1, 2, 3, 4), le moyen de commande d'affichage étant agencé pour décrire des actions symboliques exécutées par des utilisateurs, se rapportant aux divers événements qui ont lieu durant le processus de conférence par télécommunications, de sorte que chaque utilisateur (1) se voit présenter une vue d'un espace virtuel décrivant des représentations graphiques des autres utilisateurs (2, 3, 4) et de leurs activités, l'espace virtuel étant figuré comme étant vu d'un point de vue représentatif de la position de cet utilisateur (1) dans l'espace virtuel, le moyen de commande d'affichage (10, 11, 12, 13, 14) étant agencé pour représenter la présence et les activités de chaque utilisateur (2, 3, 4) à chaque autre utilisateur (1) au moyen de positions et de déplacements symboliques des représentations graphiques des utilisateurs dans un espace virtuel, l'espace virtuel étant décrit comme vu d'un point de vue représentatif de la position de cet utilisateur (1) dans l'espace virtuel, et **caractérisé en ce que** le moyen de commande d'affichage est agencé de telle sorte que dans l'espace virtuel présenté à un premier utilisateur (1), les positions et les déplacements relatifs des utilisateurs (1, 2, 3, 4) sont différents des positions et des déplacements relatifs des utilisateurs (1, 2, 3, 4) dans l'espace virtuel présenté à un second utilisateur (2).

7. Système de conférence selon la revendication 6, dans lequel le moyen de commande d'affichage est agencé pour représenter, pour chaque utilisateur (1), chacun des autres utilisateurs (2, 3, 4) de manière à ce qu'ils soient tous englobés dans le champ de vision du dispositif d'affichage (21) de cet utilisateur (1).

8. Système de conférence selon la revendication 7, dans lequel les actions symboliques sont choisies de manière à ce qu'elles aient lieu à l'intérieur d'un champ de vision fixe.

9. Système de conférence selon l'une quelconque des revendications 6 à 8, comprenant un moyen destiné à l'accès à un équipement par un utilisateur (1) en vue d'une visualisation par d'autres utilisateurs (2, 3, 4) dans lequel l'équipement auquel on accède est représenté d'une manière différente pour les utilisateurs observateurs et l'utilisateur effectuant l'accès.

10. Système de conférence selon l'une quelconque des revendications 6 à 9, dans lequel le moyen de commande d'affichage (10, 11, 13, 14) est agencé pour représenter des utilisateurs (3) qui ne sont pas actuellement activement impliqués dans la conférence par télécommunications d'une manière différente de ceux (2, 4) qui visualisent actuellement la conférence.

11. Système selon l'une quelconque des revendications 6 à 10, comprenant un moyen client (11, 12, 13, 14) associé à chaque utilisateur (1, 2, 3, 4) en vue de générer au moins une partie du point de vue de l'utilisateur.

12. Système selon l'une quelconque des revendications 6 à 11, comprenant un moyen de serveur (10) accessible à chaque utilisateur (1, 2, 3, 4) en vue de générer au moins une partie des points de vue des utilisateurs.
